# DEMANDE DE BREVET EUROPEEN

(11) **EP 2 870 873 A1**
(43) Date de publication de la demande: **13.05.2015**
(21) Numéro de dépôt: 14189507.8
(22) Date de dépôt: 20.10.2014
(51) Int. Cl.: A01K 57/00, A01G 13/10

(54) **Réceptacle pour collecter un essaim d'abeilles**

(30) Priorité: 12.11.2013 BE 201300766
(71) Demandeur: Bailly, Patricia, 7140 Morlanwelz (BE)
(72) Inventeur: Bailly, Patricia, 7140 Morlanwelz (BE)
(74) Mandataire: Gevers Patents

(57) **Abrégé**

L'invention se rapporte à un réceptacle pour collecter un essaim d'abeilles réfugié le long ou au sommet d'un support globalement cylindrique.

Ce réceptacle comprend :
- une structure de base (1a) comprenant une paroi transversale (2) et une première paroi latérale présentant chacune un évidement (4) ainsi qu'une seconde paroi latérale recourbée (6),
- une structure frontale (1b) comprenant une paroi transversale (8) et une paroi latérale (10a,10b,10c) comportant une portion formant un volume de retrait (9c),
- une structure de sommet (16) comprenant une paroi transversale, une première paroi latérale comportant une portion formant un volume de retrait et une seconde paroi latérale recourbée.

## Description

La présente invention se rapporte d'une manière générale à un réceptacle pour collecter un essaim d'abeilles.

Plus précisément, l'invention concerne un réceptacle pour collecter un essaim d'abeilles réfugié le long ou au sommet d'un support globalement cylindrique, en particulier un tronc d'arbre, un pieu ou une clôture.

A ce jour, la récolte d'un essaim d'abeilles qui s'est installé par exemple contre un tronc d'arbre nécessite l'utilisation d'un panier à présenter sous l'essaim. La collecte de l'essaim s'effectue alors en brossant les abeilles en direction du panier de manière à y faire entrer le maximum d'abeilles et augmenter les possibilités de récupérer la reine. Généralement, ce panier est constitué d'une simple boite parallélépipédique en carton qui est appliquée contre le tronc de l'arbre. Comme la surface de contact avec ce tronc est infime, plus de 90% des abeilles tombent à l'extérieur du réceptacle.

La présente invention a pour but de proposer un réceptacle capable de pallier ces inconvénients de l'état de la technique en ce qu'il permet la récolte d'un nombre extrêmement important d'abeilles de l'essaim.

Pour atteindre ce but, le réceptacle selon l'invention, du type indiqué précédemment, est caractérisé en ce qu'il comprend :
a) une structure de base comprenant une paroi transversale dont :
   - un premier côté est formé de deux portions rectilignes situées de part et d'autre d'une portion de retrait délimitant un évidement dans cette paroi transversale laquelle est surmontée de deux portions planes d'une première paroi latérale qui proviennent des portions rectilignes de ce premier côté et :
   - un second côté s'étend selon une courbe sortante ou selon une pluralité de fragments de côtés,
   cette paroi transversale étant surmontée d'une seconde paroi latérale provenant de ce second côté,
b) une structure frontale, éventuellement amovible, comprenant une paroi latérale dont un côté longitudinal est formé de deux portions rectilignes situées de part et d'autre d'une portion de retrait qui s'étend selon une courbe rentrante ou selon une pluralité de fragments de côtés et qui délimite, sur la totalité de la hauteur de ladite paroi latérale, une portion de paroi qui borne un volume de retrait, cette paroi latérale étant surmontée d'une paroi transversale provenant dudit côté longitudinal dans sa totalité ou provenant d'une portion de celui-ci comprenant la portion de retrait,
c) une structure de sommet, amovible, comprenant une paroi transversale dont :
   - un premier côté est formé de deux portions rectilignes situés de part et d'autre d'une portion de retrait délimitant un évidement dans cette paroi transversale et :
   - un second côté s'étend selon une courbe sortante ou selon une pluralité de fragments de côtés,
   cette paroi transversale étant surmontée par une première et une seconde parois latérales provenant respectivement des premier et second côtés.

Selon l'invention, les structure de base et structure frontale sont soit amovibles soit inamovibles.

### I. STRUCTURES DE BASE ET FRONTALE AMOVIBLES

Selon un premier mode de réalisation du réceptacle selon l'invention, la structure de base et la structure frontale, qui forment le corps du réceptacle selon l'invention, sont amovibles, coexistent et peuvent être solidarisées entre elles ou désolidarisées.

Dans ce mode de réalisation :
- la première paroi latérale de la structure de base présente un évidement situé sensiblement en regard de l'évidement ménagé dans la paroi transversale de cette même structure de base. Toutefois, les deux évidements se trouvent, de préférence, dans le prolongement l'un de l'autre,
- la superficie de la paroi transversale de la structure frontale est supérieure à la superficie de l'évidement pratiqué dans la paroi transversale de la structure de base en sorte que cet évidement est totalement recouvert lorsque la structure de base et la structure frontale sont solidarisées entre elles. En outre, la paroi latérale de cette structure frontale recouvre partiellement ou totalement les portions de la première paroi latérale de cette structure de base.

En conséquence, selon une de ses caractéristiques, le réceptacle selon l'invention comprend :
a) une structure de base comprenant une paroi transversale dont :
   - un premier côté est formé de deux portions rectilignes situées de part et d'autre d'une portion de retrait délimitant un évidement dans cette paroi transversale laquelle est surmontée de deux portions planes d'une première paroi latérale qui proviennent des portions rectilignes de ce premier côté et :
   - un second côté s'étend selon une courbe sortante ou selon une pluralité de fragments de côtés,
   cette paroi transversale étant surmontée d'une seconde paroi latérale provenant de ce second côté,
b) une structure frontale, amovible, comprenant une paroi latérale dont un côté longitudinal est formé de deux portions rectilignes situés de part et d'autre d'une portion de retrait qui s'étend selon une courbe rentrante ou selon une pluralité de fragments côtés et qui délimite, sur la totalité de la hauteur de ladite paroi latérale, une portion de paroi qui borne un volume de retrait, cette paroi latérale étant surmontée d'une paroi transversale provenant dudit côté longitudinal dans sa totalité ou provenant d'une portion de celui-ci comprenant la portion de retrait.

Par ailleurs, selon une autre caractéristique du réceptacle selon l'invention, la structure de base peut accueillir une structure frontale amovible choisie parmi plusieurs structures frontales ne différant entre elles que par le volume de retrait au niveau de leur paroi latérale.

Ainsi, la structure frontale séparable de la structure de base pourra être multipliée en faisant varier, à chaque exemplaire, uniquement le volume de retrait. Par conséquent, la superficie de l'évidement, au niveau de la paroi transversale de la structure de base, sera suffisante pour accueillir le volume de retrait engendré par une portion de la paroi latérale de la structure frontale. A titre d'exemple, le pourtour de cet évidement sera tel qu'il pourra épouser le pourtour du volume de retrait le plus important parmi les structures frontales proposées en relation avec une structure de base donnée.

Comme la surface de ce volume de retrait correspond à la surface du support recouverte par le réceptacle selon l'invention, il devient possible de concevoir un réceptacle adaptable à des supports de circonférences différentes.

D'autre part, la structure de base et la structure frontale amovible ainsi définies pourront être solidarisées entre elles par le biais d'un moyen approprié tel que par exemple un ensemble de boutons-pressions ou de bandes auto-agrippantes de type Velcro (R).

### II. STRUCTURES DE BASE ET FRONTALE INAMOVIBLES

Selon un mode de réalisation particulier de l'invention, la structure de base et la structure frontale, qui constituent le corps du réceptacle selon l'invention, sont solidarisées de manière inamovible.

Dans ce mode de réalisation, la paroi transversale de la structure frontale s'étend dans l'évidement de la paroi transversale de la structure de base jusqu'à l'obturer totalement tandis que la paroi latérale de la structure frontale fait corps avec les portions de première paroi latérale de la structure de base de manière à former un corps de réceptacle d'un seul tenant.

En conséquence, selon une autre de ses caractéristiques, le réceptacle selon l'invention comprend :
a) une structure de base comprenant une paroi transversale dont :
   - un premier côté est formé de deux portions rectilignes situées de part et d'autre d'une portion de retrait délimitant un évidement dans cette paroi transversale laquelle est surmontée de deux portions planes d'une première paroi latérale qui proviennent des portions rectilignes de ce premier côté et :
   - un second côté s'étend selon une courbe sortante ou selon une pluralité de fragments de côtés,
   cette paroi transversale étant surmontée d'une seconde paroi latérale provenant de ce second côté,
b) une structure frontale, inamovible, constituée d'une paroi latérale dont les deux portions rectilignes du côté longitudinal sont fusionnées respectivement avec les deux portions rectilignes du premier côté de la paroi transversale de la structure de base délimitant ainsi, sur la totalité de la hauteur de cette paroi latérale, deux portions de parois planes situées de part et d'autre d'une portion de paroi qui borne un volume de retrait, cette paroi latérale étant surmontée d'une paroi transversale qui provient dudit côté longitudinal et qui obture totalement l'évidement pratiqué dans la paroi transversale de la structure de base.

Au surplus, les structures de base, frontale et de sommet du réceptacle selon l'invention peuvent présenter les caractéristiques, propriétés ou configurations suivantes :

### A. Structure de base

Selon une caractéristique supplémentaire de l'invention, le second côté de la paroi transversale de la structure de base s'étend selon une pluralité de fragments de côtés issus d'un polygone convexe tel qu'un octogone convexe ou, de préférence, un décagone convexe. Habituellement, les fragments de côtés issus de ce polygone convexe sont tous sensiblement identiques. Il s'agit, en particulier, de 4 fragments de côtés provenant, notamment d'un octogone convexe régulier, préférentiellement d'un décagone régulier.

Toutefois, selon une caractéristique préférée, le second côté de la paroi transversale de la structure de base s'étend selon une courbe sortante, par exemple une demi-circonférence.

En corollaire, la seconde paroi latérale de la structure de base s'étend selon une pluralité de fragments de parois, notamment 4 fragments de parois, issus d'un polyèdre convexe tel qu'un octaèdre convexe, de préférence un décaèdre convexe, en particulier un octaèdre convexe régulier, préférentiellement un décaèdre convexe régulier. En général, ces fragments de parois sont tous sensiblement identiques.

Toutefois, selon une autre caractéristique particulière de l'invention, la seconde paroi latérale de la structure de base s'étend selon une portion de paroi latérale provenant d'un cylindre. De préférence, cette portion de paroi latérale d'un cylindre équivaut sensiblement à un demi-cylindre.

En outre, selon une caractéristique supplémentaire de l'invention, la paroi transversale de la structure de base est munie extérieurement d'un moyen de préhension tel qu'au moins une poignée.

### B. Structure frontale

D'autre part, au niveau de la structure frontale, amovible ou pas :
a) la portion de retrait provenant d'un côté longitudinal de sa paroi latérale peut être formée elle-même d'une pluralité de fragments de côtés issus d'un polygone concave tel qu'un octogone concave ou, de préférence, un décagone concave. Il s'agit, en particulier, de 4 fragments de côtés issus, notamment d'un octogone concave régulier, préférentiellement d'un décagone concave régulier. Toutefois, cette portion de retrait correspond, de préférence, à une portion de circonférence qui équivaut sensiblement à une demi-circonférence,
b) la portion de paroi latérale, issue de la portion de retrait provenant dudit côté longitudinal, peut correspondre à une pluralité de fragments d'une paroi latérale d'un polyèdre concave tel que par exemple un octaèdre concave, de préférence un décaèdre concave. En particulier, il s'agit de 4 fragments de parois provenant, en particulier d'un octaèdre concave régulier, préférentiellement d'un décaèdre concave régulier. Toutefois, cette portion de paroi latérale équivaut, généralement, à une portion de paroi latérale d'un cylindre qui, de préférence, correspond sensiblement à un demi-cylindre. Dans ce cas, la portion de paroi latérale qui borne le volume de retrait permet, lorsque cette portion de paroi est approchée du support, de couvrir jusqu'à environ 50% de sa circonférence.

### C. Structure de sommet

La structure de sommet sert habituellement de couvercle au corps de réceptacle selon l'invention afin d'y maintenir confinées les abeilles récoltées en attendant leur transfert dans une ruche ou une ruchette adéquate. Comme ces abeilles ne séjournent que quelques minutes dans le réceptacle, un couvercle n'est pas toujours indispensable.

En tout état de cause, la configuration de la structure de sommet et celle du corps de réceptacle seront sensiblement les mêmes pour permettre une juxtaposition aisée de cette structure de sommet avec ce corps de réceptacle lorsque celui-ci est recouvert et entouré par cette structure de sommet. Toutefois, leurs dimensions peuvent différer. En effet, si la longueur de chaque côté du réceptacle d'une part et de la structure de sommet d'autre part seront sensiblement identiques, par contre leurs hauteurs pourront varier.

Ainsi :
a) le second côté de la paroi transversale de la structure de sommet est sensiblement identique au second côté de la paroi transversale de la structure de base et peut s'étendre selon une pluralité de fragments de côtés issus d'un polygone convexe tel qu'un octogone convexe, de préférence un décagone convexe. Il s'agit, en particulier, de 4 fragments de côtés provenant, notamment d'un octogone convexe régulier, préférentiellement d'un décagone convexe régulier. Habituellement, ces fragments de côtés sont tous sensiblement identiques entre eux et, en outre, sensiblement identiques, en longueur et en nombre, aux fragments de côtés formant le second côté de la paroi transversale de la structure de base.
b) le second côté de la paroi transversale de la structure de sommet peut s'étendre, de préférence, selon une courbe sortante, par exemple une demi-circonférence. Dans ce cas, le second côté de cette paroi transversale de la structure de sommet et le second côté de la paroi transversale de la structure de base s'étendent chacun selon une courbe sortante sensiblement identique.
c) la première paroi latérale de la structure de sommet est sensiblement identique à la première paroi latérale du réceptacle à l'exception toutefois de sa hauteur qui pourra varier si nécessaire,
d) la seconde paroi latérale de la structure de sommet, quant à elle, est sensiblement identique à la seconde paroi latérale du réceptacle à l'exception cependant de sa hauteur qui peut varier. Cette seconde paroi de la structure de sommet peut s'étendre :
   * soit selon une pluralité de fragments de parois, notamment 4 fragments de parois, issus d'un polyèdre convexe tel qu'un octaèdre convexe, de préférence un décaèdre convexe régulier, en particulier un octaèdre convexe régulier, préférentiellement un décaèdre convexe régulier. Généralement, les fragments de parois qui forment cette seconde paroi de la structure de sommet, sont tous sensiblement identiques entre eux. Ils sont, d'autre part, sensiblement identiques en largeur et identiques en nombre, aux fragments de parois formant la seconde paroi latérale de la structure de base.
   * soit selon une portion de paroi latérale d'un cylindre, par exemple un demi-cylindre. Dans ce cas, la seconde paroi de la structure de sommet et la seconde paroi de la structure de base s'étendent chacune selon une courbure sortante sensiblement identique.

Le réceptacle selon l'invention peut être réalisé en une matière rigide à semi-rigide lui conférant un poids acceptable compte tenu des manipulations à effectuer lors de son utilisation, par exemple une matière plastique, de la tôle d'acier léger ou de préférence du carton rigide.

L'invention sera mieux comprise et d'autres buts, caractéristiques et avantages de celle-ci apparaîtront plus clairement au cours de la description explicative qui va suivre faite en référence aux dessins schématiques annexés donnés uniquement à titre d'exemple non limitatif illustrant un mode de réalisation de l'invention et dans lesquels :
- la Figure 1 est une représentation d'une vue en plongée d'une structure de base et d'une structure frontale amovible constituant le corps d'un réceptacle selon l'invention destiné à collecter des abeilles,
- les Figures 2 à 5 sont des représentations de vues respectivement frontale, arrière, du dessus et du dessous de la structure de base à la Figure 1,
- les Figures 6 à 9 sont des représentations de vues respectivement frontale, arrière, du dessus et du dessous de la structure frontale à la Figure 1,
- la Figure 10 est une représentation d'une vue en plongée d'un corps de réceptacle selon l'invention formé d'une structure de base et d'une structure frontale l'ensemble étant d'un seul tenant,
- la Figure 11 est une représentation d'une vue en plongée d'un réceptacle selon l'invention formé d'un corps de réceptacle d'un seul tenant surmonté d'un couvercle.

### EXEMPLE 1

### CORPS DE RECEPTACLE EN DEUX PARTIES

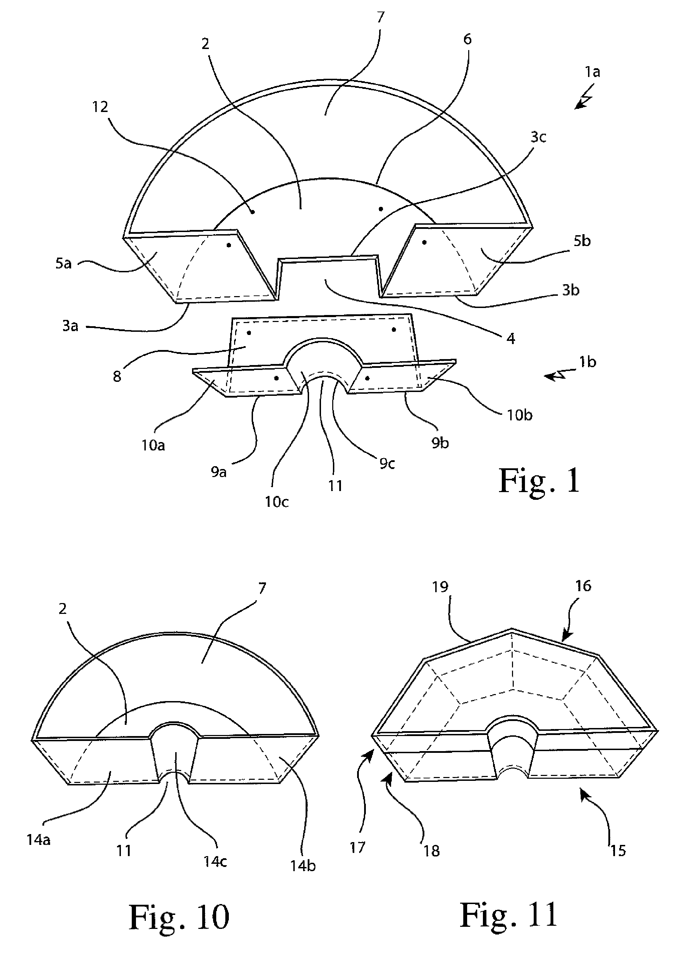

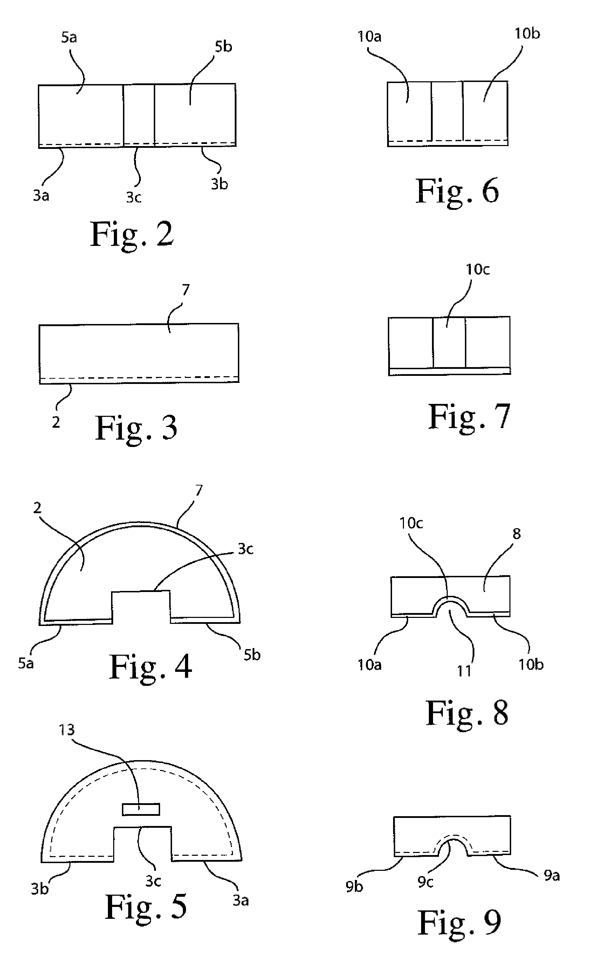

Tel que représenté à la Figure 1, le corps du réceptacle selon l'invention comprend une structure de base la et une structure frontale 1b amovible. Cette structure de base 1a, également visible aux Figures 2 à 5, est formée d'une paroi transversale 2 bordée par un premier côté qui présente deux portions rectilignes 3a et 3b, situées dans le même prolongement et de part et d'autre d'une portion 3c de retrait donnant naissance à un évidement 4. Les deux portions 3a, 3b sont surmontées d'une première paroi latérale qui comprend respectivement les portions 5a et 5b situées, par conséquent, dans le même prolongement. Ces figures montrent également un second côté 6 qui s'étend selon une courbe sortante lequel est surmonté d'une seconde paroi 7 latérale. Quant à la structure latérale 1b, représentée également aux Figures 6 à 9, celle-ci est composée d'une paroi transversale 8 dont un côté longitudinal présente deux portions 9a et 9b rectilignes. Ces deux portions de côté sont situées dans le même prolongement et de part et d'autre d'une portion de retrait 9c qui épouse une demi-circonférence rentrante. Ce côté longitudinal, dans sa totalité, est surmonté d'une paroi latérale composée des portions 10a et 10b planes ainsi que d'une portion 10c recourbée. Celle-ci surmonte la portion de retrait 9c et donne naissance à un volume de retrait 11 équivalant sensiblement à un demi-cylindre de retrait. On observe également la présence de boutons-pressions 12 au niveau des parois transversales de ces deux structures ainsi qu'au niveau des portions de parois latérales 5a, 5b de la structure de base et des portions de parois latérales 10a, 10b de la structure latérale. La structure de base montre également, à la Figure 5, une poignée 13 fixée à l'extérieur de la paroi transversale 2.

A la lumière de ce qui précède, on comprend que lors d'une mise en oeuvre du réceptacle de l'invention ainsi décrit, par exemple pour la récupération d'un essaim fixé contre un tronc d'arbre, on procède d'abord à une sélection, parmi des structures latérales préexistantes se différenciant uniquement par leur volume de retrait en l'occurrence leur demi-cylindre de retrait, la structure frontale la plus appropriée compte tenu du volume de ce tronc d'arbre que le volume de retrait sera amené à recouvrir. Au moyen des boutons-pression 12, on procède ensuite à la fixation de la structure frontale choisie à la structure de base. On passe ensuite la main dans la poignée 13, on positionne le réceptacle contre le tronc d'arbre, le demi-cylindre de retrait épousant le tronc. On fait ensuite tomber les abeilles dans le réceptacle au moyen d'une brosse tout en promenant celui-ci autour du tronc toujours en maintenant le demi-cylindre de retrait contre celui-ci.

### EXEMPLE 2

### CORPS DE RECEPTACLE D'UN SEUL TENANT

Sur la Figure 10, on a représenté un corps de réceptacle où l'on reconnait la seconde paroi latérale 7 de la structure de base ainsi que la paroi 2 transversale confondue avec la paroi transversale 8 de la structure frontale. L'évidement 4 à la structure de base est ainsi comblé par la paroi transversale 8 de la structure frontale. En outre, la paroi frontale de cette structure frontale est formée de la portion de paroi 14a résultant de la fusion des portions de parois 5a et 10a, de la portion de paroi 14b résultant de la fusion des portions de parois 5b et 10b ainsi que de la portion de paroi 14c qui révèle un volume de retrait 11 sensiblement semi-cylindrique.

### EXEMPLE 3

### CORPS DE RECEPTACLE D'UN SEUL TENANT AVEC COUVERCLE

La Figure 11 montre un corps de réceptacle 15 muni d'un couvercle 16 dont les parois 17 latérales épousent étroitement la configuration des parois 18 latérales de ce corps de réceptacle et dont la seconde de ces parois latérales s'étend à partir de 4 côtés 19 issus d'un octaèdre.

Le réceptacle selon l'invention présente des avantages incontestables par rapport à l'état de la technique évoqué précédemment. A titre d'exemple, lorsque le corps du réceptacle selon l'invention est approché du support jusqu'à combler le volume de retrait de la structure frontale, la surface de contact entre ce support et ce corps de réceptacle est optimalisée. Cette surface peut couvrir jusqu'à environ 50% de la circonférence de ce support. De cette façon, la perte d'abeilles est fortement limitée lors de leur récupération. En effet, il est possible de cette manière de récolter jusqu'à 80 à 85 % de l'essaim, ce qui augmente les chances d'obtenir la reine qui doit être absolument récupérée. Par contre, l'utilisation d'un réceptacle selon l'état de la technique ne permet de récolter qu'environ 10% de l'essaim.

D'autre part, la forme convexe, généralement semi-octaédrique ou de préférence recourbée, de la seconde paroi latérale de la structure de base réduit la distance entre le support et l'utilisateur du réceptacle peu importe l'angle d'approche. Ainsi, quel que soit cet angle d'approche, cette distance, idéalement de 25 à 30 cm, se révèle constante contrairement au réceptacle connu où seule la zone centrale de la paroi opposée à celle qui est en contact avec le support permet cette distance d'approche idéale. Les autre zones de cette paroi opposée du réceptacle connu éloignent, du support, le bras actif de l'utilisateur jusqu'à atteindre une distance d'environ 40 cm aux endroits où ce bras à le plus de probabilités de s'approcher.

## Revendications

1. Réceptacle pour collecter un essaim d'abeilles réfugié le long ou au sommet d'un support globalement cylindrique, **caractérisé en ce qu'**il comprend :
a) une structure (1a) de base comprenant une paroi transversale (2) dont :
- un premier côté est formé de deux portions (3a, 3b) rectilignes situées de part et d'autre d'une portion (3c) de retrait délimitant un évidement (4) dans cette paroi transversale laquelle est surmontée de deux portions (5a, 5b) planes d'une première paroi latérale qui proviennent des portions rectilignes de ce premier côté et :
- un second côté (6) s'étend selon une courbe sortante ou selon une pluralité de fragments de côtés,
cette paroi transversale étant surmontée d'une seconde paroi (7) latérale provenant de ce second côté,
b) une structure (1b) frontale, éventuellement amovible, comprenant une paroi latérale (10a ; 10b ; 10c) dont un côté longitudinal est formé de deux portions (9a ; 9b) rectilignes situées de part et d'autre d'une portion (9c) de retrait qui s'étend selon une courbe rentrante ou selon une pluralité de fragments côtés et qui délimite, sur la totalité de la hauteur de ladite paroi latérale, une portion (10c) de paroi qui borne un volume (11) de retrait, cette paroi latérale étant surmontée d'une paroi (8) transversale provenant dudit côté longitudinal dans sa totalité ou provenant d'une portion de celui-ci comprenant la portion de retrait,
c) une structure (16) de sommet, amovible, comprenant une paroi transversale dont :
- un premier côté est formé de deux portions rectilignes situés de part et d'autre d'une portion de retrait délimitant un évidement dans cette paroi transversale et :
- un second côté s'étend selon une courbe sortante ou
selon une pluralité de fragments de côtés (19),
cette paroi transversale étant surmontée par une première et une seconde parois latérales provenant respectivement des premier et second côtés.

2. Réceptacle selon la revendication 1, caractérisé en en ce qu'il comprend :
a) une structure de base comprenant une paroi transversale dont :
- un premier côté est formé de deux portions rectilignes situées de part et d'autre d'une portion de retrait délimitant un évidement dans cette paroi transversale laquelle est surmontée de deux portions planes d'une première paroi latérale qui proviennent des portions rectilignes de ce premier côté et :
- un second côté s'étend selon une courbe sortante ou selon une pluralité de fragments de côtés,
cette paroi transversale étant surmontée d'une seconde paroi latérale provenant de ce second côté,
b) une structure frontale, amovible, comprenant une paroi latérale dont un côté longitudinal est formé de deux portions rectilignes situés de part et d'autre d'une portion de retrait qui s'étend selon une courbe rentrante ou selon une pluralité de fragments de côtés et qui délimite, sur la totalité de la hauteur de ladite paroi latérale, une portion de paroi qui borne un volume de retrait, cette paroi latérale étant surmontée d'une paroi transversale provenant dudit côté longitudinal dans sa totalité ou provenant d'une portion de celui-ci comprenant la portion de retrait.

3. Réceptacle selon la revendication 1 ou 2, **caractérisé en ce que** la structure de base et la structure frontale amovibles sont solidarisées entre elles par le biais d'un moyen approprié.

4. Réceptacle selon la revendication 3, **caractérisé en ce que** le moyen approprié est un ensemble de boutons-pressions (12) ou de bandes auto-agrippantes.

5. Réceptacle selon l'une des revendications 1 à 4, **caractérisé en ce que** la structure de base peut accueillir une structure frontale amovible choisie parmi plusieurs structures frontales ne différant entre elles que par le volume de retrait au niveau de leur paroi latérale.

6. Réceptacle selon la revendication 1, caractérisé en en ce qu'il comprend :
a) une structure de base comprenant une paroi transversale dont :
- un premier côté est formé de deux portions rectilignes situées de part et d'autre d'une portion de retrait délimitant un évidement dans cette paroi transversale laquelle est surmontée de deux portions planes d'une première paroi latérale qui proviennent des portions rectilignes de ce premier côté et :
- un second côté s'étend selon une courbe sortante ou selon une pluralité de fragments de côtés,
cette paroi transversale étant surmontée d'une seconde paroi latérale provenant de ce second côté,
b) une structure frontale, inamovible, constituée d'une paroi latérale dont les deux portions rectilignes (9a, 9b) dudit côté longitudinal sont fusionnées respectivement avec les deux portions (3a, 3b) rectilignes du premier côté de la paroi transversale de la structure de base délimitant ainsi, sur la totalité de la hauteur de cette paroi latérale, deux portions (14a, 14b) de parois planes situées de part et d'autre d'une portion (14c) de paroi qui borne un volume de retrait, cette paroi latérale étant surmontée d'une paroi transversale qui provient dudit côté longitudinal et qui obture totalement l'évidement (4) pratiqué dans la paroi transversale de la structure de base.

7. Réceptacle selon l'une des revendications 1 à 6, **caractérisé en ce que** la seconde paroi latérale de la structure de base s'étend selon une portion de paroi latérale d'un cylindre.

8. Réceptacle selon l'une des revendications 1 à 7, **caractérisé en ce que** la portion de paroi latérale de la structure frontale équivaut à une portion de paroi latérale d'un cylindre.

9. Réceptacle selon l'une des revendications 1 à 8, **caractérisé en ce que** la seconde paroi latérale de la structure de sommet s'étend selon une portion de paroi latérale d'un cylindre.

10. Réceptacle selon l'une des revendications 7 à 9, **caractérisé en ce que** la portion de paroi latérale d'un cylindre équivaut sensiblement à un demi-cylindre.

11. Réceptacle selon l'une des revendications 1 à 6, **caractérisé en ce que** la seconde paroi latérale de la structure de base s'étend selon une pluralité de fragments de parois, tous sensiblement identiques, issus d'un polyèdre convexe.

12. Réceptacle selon l'une des revendications 1 à 6, **caractérisé en ce que** la seconde paroi latérale de la structure de sommet s'étend selon une pluralité de fragments de parois, tous sensiblement identiques, issus d'un polyèdre convexe.

13. Réceptacle selon l'une des revendications 10 à 12, **caractérisé en ce que** le polyèdre convexe est un octaèdre convexe ou un décaèdre convexe.

14. Réceptacle selon l'une des revendications 10 à 13, **caractérisé en ce que** la seconde paroi s'étend selon 4 fragments de parois.

15. Réceptacle selon l'une des revendications 1 à 14, **caractérisé en ce que** la portion de paroi latérale qui borne le volume de retrait au niveau de la structure frontale permet, lorsque cette portion de paroi est approchée du support, de couvrir jusqu'à environ 50% de sa circonférence.

16. Réceptacle selon l'une des revendications 1 à 15, **caractérisé en ce que** la paroi transversale de la structure de base est munie extérieurement d'un moyen de préhension.

17. Réceptacle selon la revendication 16, **caractérisé en ce que** le moyen de préhension correspond à au moins une poignée (13).
